(19)

Europäisches
Patentamt
European
Patent Office
Office européen
des brevets

(11) **EP 2 586 299 A1**

(12) **EUROPEAN PATENT APPLICATION**
published in accordance with Art. 153(4) EPC

(43) Date of publication:
**01.05.2013 Bulletin 2013/18**

(51) Int Cl.:
***A01K 23/00*** *(2006.01)*    ***A01K 1/01*** *(2006.01)*

(21) Application number: **11797977.3**

(22) Date of filing: **06.06.2011**

(86) International application number:
**PCT/JP2011/062961**

(87) International publication number:
**WO 2011/162091 (29.12.2011 Gazette 2011/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2010 JP 2010145695**

(71) Applicant: **Unicharm Corporation
Ehime 799-0111 (JP)**

(72) Inventors:
• **MATSUO, Takayuki
Kanonji-shi
Kagawa 769-1602 (JP)**
• **HIRAO, Tomoko
Kanonji-shi
Kagawa 769-1602 (JP)**
• **KANEDA, Daisuke
Toyama-shi
Toyama 939-0592 (JP)**

(74) Representative: **Vaughan, Jennifer Ann
Saunders & Dolleymore LLP
9 Rickmansworth Road
GB-Watford, Herts. WD18 0JU (GB)**

(54)    **SYSTEM TOILET FOR DOGS**

(57)    Disclosed is a toilet system for dogs that can be used without filling an upper receptacle with particulate matter, and that can be easily cleaned. The toilet system (1) for dogs is provided with: an excrement containment receptacle (2) that has an excrement containment section (21) that can contain excrement; and an upper receptacle (4) that has a liquid-permeable bottom surface section (41) and side wall section (42) that rises from the rim of the bottom surface section (41). The toilet system (1) for dogs is used with a liquid-permeable panel (3), which is liquid-absorbent, mounted on the top surface of the bottom surface section (41). The rise angle of the side wall section (42) from the bottom surface section (41) in the upper receptacle (4) is at least 90 degrees, and in the upper receptacle (4), the bottom surface section (41) and the side wall section (42) are formed integrally without seams.

FIG. 4

EP 2 586 299 A1

**Description**

TECHNICAL FIELD

The present invention relates to a toilet system for dogs.

BACKGROUND ART

Conventionally, a toilet system for an animal which can be disposed in a room is used in order to manage the excrement of the animal that inhabits the room. For example, Patent Document 1 discloses a toilet system for an animal, and in particular for a cat, that is provided with an excrement containment receptacle configured to contain excrement; and an upper receptacle disposed on an upper section of the excrement containment receptacle, the upper receptacle including a liquid-permeable bottom surface section and a side wall section that rises from the bottom surface section.

The toilet system for an animal that is disclosed in Patent Document 1 is mainly adapted for use in relation to a cat, and therefore is used in a state in which particulate matter having a particle radius of several millimeters, so-called cat sand, is filled into the upper receptacle. Consequently, the upper receptacle in the toilet system for an animal disclosed in Patent Document 1 is configured so that an upper end of the side wall section inclines inwardly to prevent flight of the filling of particulate matter to the outside.

In this manner, when the side wall section inclines inwardly, the upper receptacle that includes the bottom surface section and the side wall section cannot be integrally formed using extrusion molding. In this context, a conventional toilet system for an animal that is used by filling with particulate matter is mainly configured by separately forming a section to configure mainly the bottom surface section and a section to configure the upper end of the side wall section that is inclined inwardly, and thereafter connecting the two sections to configure the upper receptacle.

Patent Document 1: Japanese Unexamined Patent Application, Publication No. 2008-148603

DISCLOSURE OF THE INVENTION

Problems to be Solved by the Invention

However, in the toilet system for an animal that is described above, a slight gap is produced in the connecting section for the section that configures the bottom surface section and the section that configures the side wall section in the upper receptacle, and animal excrement, in particular urine, seeps into this gap. As a result, the upper receptacle tends to be soiled and there is a large burden to clean the gap.

It is noted that a dog does not have a particular need for the presence of particulate matter such as cat sand when excreting, and furthermore when particulate matter is present, there is a possibility of accidental ingestion of the particulate matter by the dog. Consequently, use without filling the upper receptacle with particulate matter has been proposed when using a toilet system for an animal in relation to a dog. The number of households that keep a dog indoors has increased in recent years.

This increase in the number of households that keep a dog indoors has caused a need for the development of a toilet system for dogs that can be easily cleaned.

Consequently, it is an object of the present invention to provide a toilet system for dogs that can be used without filling an upper receptacle with particulate matter and that can be easily cleaned.

Means for Solving the Problems

The present invention relates to a toilet system for dogs including: an excrement containment receptacle having an excrement containment section for containment of excrement, and an upper receptacle having a liquid-permeable bottom surface section and a side wall section that rises from the rim of the bottom surface section; and a liquid-permeable panel that is liquid-absorbent used and mounted on a top surface of the bottom surface section. The rise angle of the side wall section from the bottom surface section is at least 90 degrees, and the bottom surface section and the side wall section of the upper receptacle are formed integrally without seams.

It is preferred that the bottom surface section includes a plurality of first crosspieces disposed at predetermined intervals and extending in a first direction that is orthogonal to a thickness direction of the bottom surface section, a plurality of second crosspieces disposed at predetermined intervals and extending in a second direction that is orthogonal to the thickness direction of the bottom surface section and orthogonal to the first direction, and a plurality of through holes enclosed by the first crosspiece and the second crosspiece, penetrating through the thickness direction of the bottom surface section.

It is preferred that the plurality of through holes is formed with a rectangular shape, each has substantially the same shape and dimension when viewed in plan, and a transverse length of the through holes when viewed in plan is 5 mm to 20 mm.

It is preferred that an inner surface of the side wall section is configured from a curved surface that curves towards an outer side, and the plurality of through holes is formed in substantially the whole area including the proximity of the rim of the bottom surface section.

It is preferred that the liquid-permeable panel is a disposable panel that is mainly configured from paper, and includes a plurality of holes penetrating through the thickness direction thereof.

Effects of the Invention

The toilet system for dogs according to the present invention can be used without filling the upper receptacle with particulate matter and can be easily cleaned.

BRIEF DESCRIPTION OF THE DRAWINGS

FIG. 1 is a perspective view illustrating a toilet system for dogs according to a first embodiment of the present invention;
FIG. 2 is an exploded perspective view illustrating the toilet system for dogs illustrated in FIG. 1;
FIG. 3 is a partially enlarged sectional view illustrating the toilet system for dogs illustrated in FIG. 1;
FIG. 4 is a plan view of the toilet system for dogs illustrated in FIG. 1, and illustrates the state with a liquid-permeable panel removed;
FIG. 5 is a sectional view along the line A-A in FIG. 4;
FIG. 6A illustrates a manufacturing step of the upper receptacle, and illustrates the state in which the cavity mold and the core mold are closed;
FIG. 6B illustrates a manufacturing step of the upper receptacle, and illustrates the state of filling a resinous material into a space formed between the cavity mold and the core mold;
FIG. 6C illustrates a manufacturing step of the upper receptacle, and illustrates the state of opening the cavity mold and the core mold and removing the upper receptacle;
FIG. 7 is an enlarged plan view of the liquid-permeable panel;
FIG. 8 is a sectional view along the line X-X in FIG. 7;
FIG. 9 is a perspective view illustrating a toilet system for dogs according to a second embodiment of the present invention; and
FIG. 10 is a perspective view illustrating the state in which a retractable tray is pulled from the toilet system for dogs according to the second embodiment.

EXPLANATION OF REFERENCE NUMERALS

1     Toilet system for Dogs

2     Excrement Containment Receptacle

3     Liquid-permeable Panel

4     Upper Receptacle

6     Liquid-Absorbent Sheet

21    Excrement Containment Section

31    Hole

41    Bottom Surface Section

42    Upper Side Wall Section (Side Wall Section)

411    First Crosspiece

412    Second Crosspiece

413    Through Hole

PREFERRED MODE FOR CARRYING OUT THE INVENTION

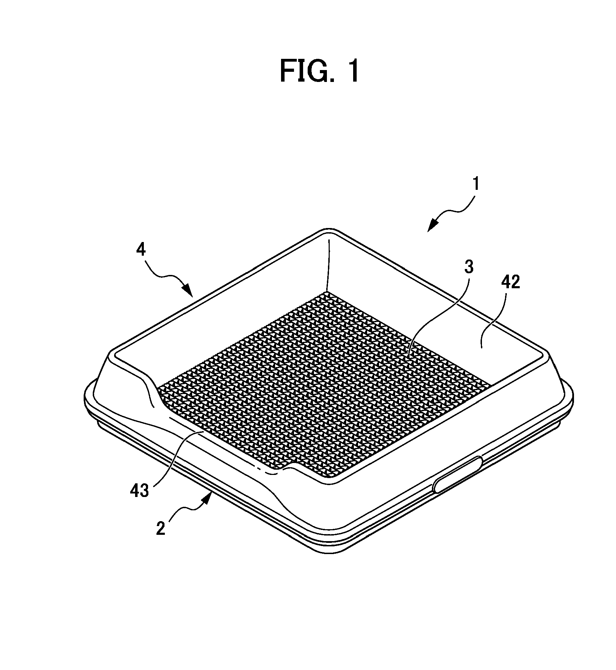

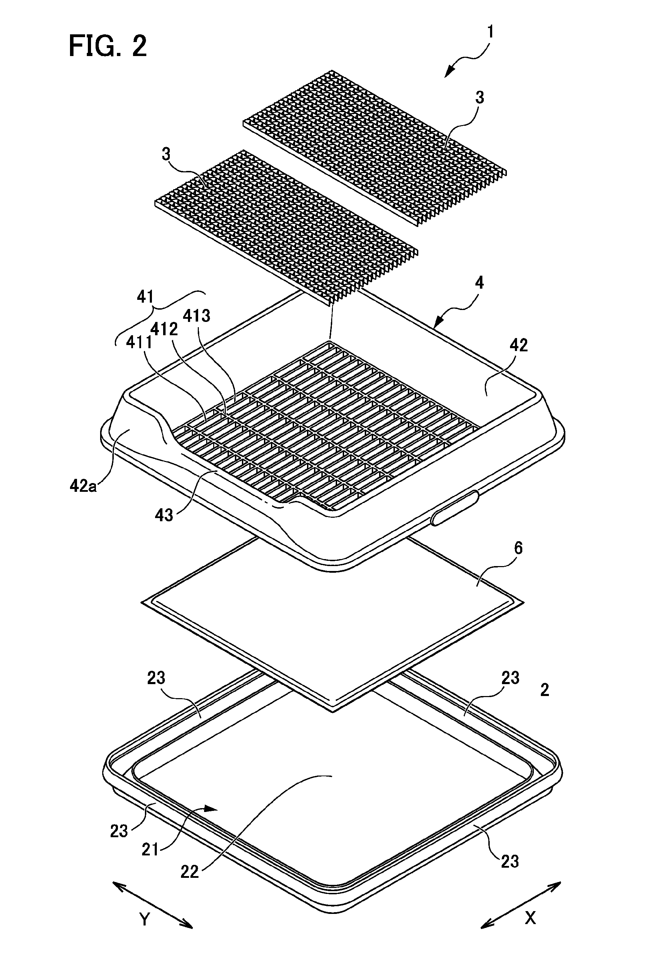

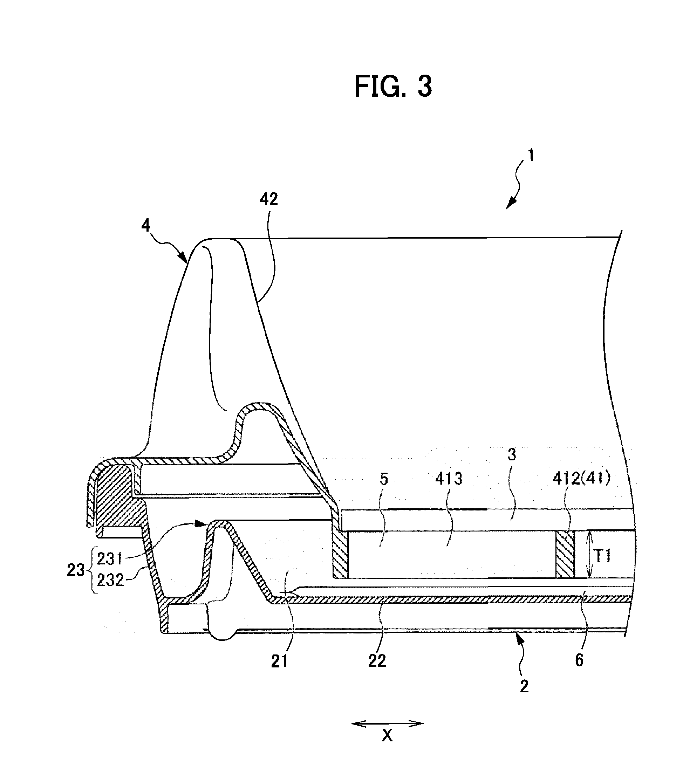

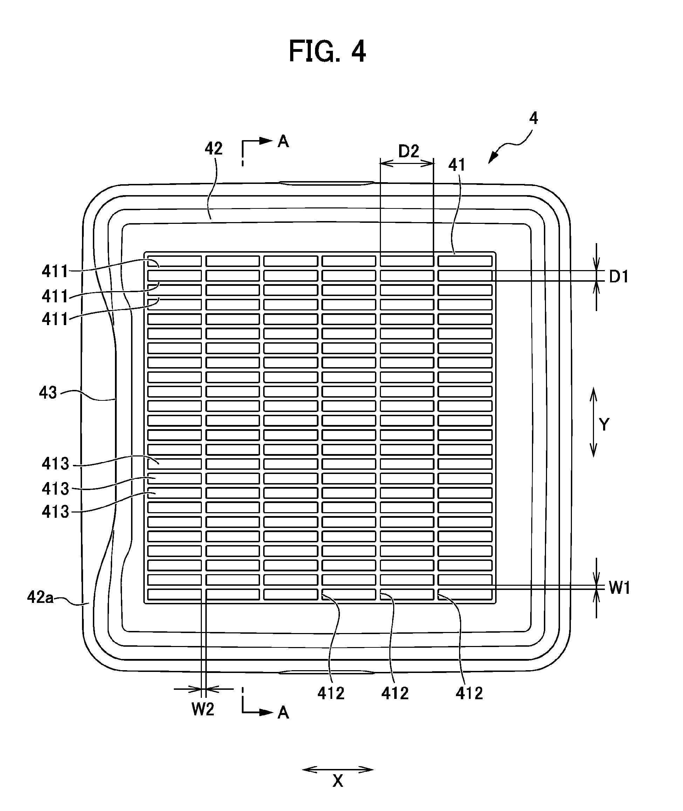

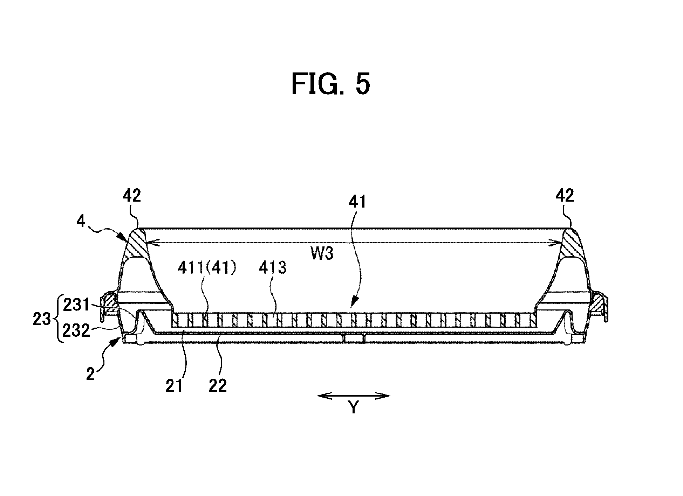

The preferred aspects of a toilet system for dogs according to the present invention will be described making reference to the figures. FIG. 1 is a perspective view illustrating a toilet system 1 for dogs according to a first embodiment of the present invention. FIG. 2 is an exploded perspective view illustrating the toilet system 1 for dogs. FIG. 3 is a partially enlarged sectional view illustrating the toilet system 1 for dogs. FIG. 4 is a plan view of the toilet system 1 for dogs, and illustrates the state with a liquid-permeable panel 3 removed. FIG. 5 is a sectional view along the line A-A in FIG. 4.

The term "dog" as used in the present specification mainly denotes a dog that is kept indoors, and more particularly, denotes a small dog generally having a weight of no more than 7 kg.

As illustrated in FIG. 1 and FIG. 2, the toilet system 1 for dogs according to the first embodiment includes an excrement containment receptacle 2 that opens at a upper surface and that has an excrement containment section 21 for containment of excrement; and an upper receptacle 4 that is disposed on an upper section of the excrement containment receptacle 2 to cover the open upper surface of the excrement containment receptacle 2. A liquid-permeable panel 3, which is liquid-absorbent is mounted on the upper receptacle 4.

As illustrated in FIG. 2 and FIG. 3, the excrement containment receptacle 2 includes a substantially square containment receptacle bottom surface section 22 and a containment receptacle side wall section 23 that rises from the containment receptacle bottom surface section 22. The excrement containment receptacle 2 can contain excrement.

The containment receptacle bottom surface section 22 is configured substantially as a square when in plan view.

The containment receptacle side wall section 23 rises upright on the four respective sides of the containment receptacle bottom surface section 22. As illustrated in FIG. 3 and FIG. 5, the containment receptacle side wall section 23 includes an inner side wall section 231 and an outer side wall section 232 that is positioned on an outer side of the inner side wall section 231.

The inner side wall section 231 is provided on a rim section of the containment receptacle bottom surface section 22. The inner surface of the inner side wall section 231 inclines towards an outer side. The outer surface of the inner side wall section 231 is substantially vertical with respect to the containment receptacle bottom surface section 22.

The outer side wall section 232 is configured with a height that is greater than the inner side wall section 231. The upper end side of the outer side wall section 232 is configured with a shape that protrudes outwardly and upwardly.

The excrement containment section 21 is formed from the space surrounded by the containment receptacle bottom surface section 22 and the four containment receptacle side wall sections 23 (inner side wall sections 231). As illustrated in FIG. 3, a liquid-absorbent sheet 6 is disposed in the excrement containment section 21 and the liquid-absorbent sheet 6 absorbs urine and the like that is excreted by a dog.

As illustrated in FIG. 1 to FIG. 4, the upper receptacle 4 includes a bottom surface section 4 that is configured with an open upper surface and has a substantially square shape when viewed in plan; and four upper side wall sections 42 as a side wall section disposed upright respectively from the four sides which are the rim of the bottom surface section 41.

As illustrated in FIG. 2 and FIG. 4, the bottom surface section 41 includes a plurality of first crosspieces 411, a plurality of second crosspieces 412, and a plurality of through holes 413, and is liquid permeable.

As illustrated in FIG. 4, the plurality of first crosspieces 411 is disposed at a predetermined interval in a substantially parallel configuration and extends in a first direction X that is orthogonal to the thickness direction of the bottom surface section 41.

The plurality of second crosspieces 412 is disposed at a predetermined interval in a substantially parallel configuration and extends in a second direction Y that is orthogonal to the thickness direction of the bottom surface section 41.

The plurality of through holes 413 is formed with substantially the same size and shape by a space enclosed by two adjacent first crosspieces 411 and two adjacent second crosspieces 412, and is configured with an aperture in the thickness direction of the bottom surface section 41.

In the present embodiment, as illustrated in FIG. 4, the length between two adjacent first crosspieces 411 is configured to be less than the length between two adjacent second crosspieces 412. In this manner, the plurality of through holes 413 has a rectangular shape in which the first direction X is the longitudinal direction and the second direction Y is the transverse direction. The plurality of through holes 413 is formed in substantially the whole area including the proximity of the rim section of the bottom surface section 41.

The transverse length D1 of the plurality of through holes 413 is preferably 5 mm to 20 mm, and more preferably 10 mm to 15 mm from the point of view of maintaining the preferred liquid permeable characteristics and facilitating cleaning of the upper receptacle 4.

The longitudinal length D2 of the plurality of through holes 413 is preferably 10 mm to 100 mm, and more preferably 40 mm to 70 mm from the point of view of maintaining the strength of the bottom surface section 41.

The width W1 of the first crosspieces 411 and the width W2 of the second crosspieces 412 are preferably 1 mm to 10 mm, and more preferably 2.0 mm to 6.0 mm from the point of view of maintaining preferred liquid permeable characteristics and maintaining the strength of the bottom surface section 41.

The thickness of the first crosspieces 411 and the second crosspieces 412 (thickness of the bottom surface section 41) T1 (refer to FIG. 3) is preferably 1 mm to 15 mm from the point of view of maintaining the strength of the bottom surface section 41 and preventing a liquid such as urine or the like contained in the excrement containment section 21 from returning to the liquid permeable panel 3.

As illustrated in FIG. 5, the upper side wall section 42 has a rise angle from the bottom surface section 41 of at least 90 degrees. More specifically, the inner surface of the upper side wall section 42 is configured from a curved surface that curves towards an outer side, and inclines gently towards an outer side from the side of the bottom surface section 41 towards the upper end. The distance W3 between the inner surfaces of the pair of upper side wall sections 42 that are disposed in an opposed configuration gradually increases from the side of the bottom surface section 41 towards the upper end section.

That is to say, in the present specification, "the rise angle from the bottom surface section 41 of the upper side wall section 42 is at least 90 degrees" means that there is not a portion in which the distance W3 between the inner surfaces of the pair of upper side wall sections 42 that are disposed in an opposed configuration becomes smaller from the bottom surface section 41 towards the upper end.

The outer surface of the upper side wall section 42 is slightly inclined from the bottom surface section 41 inwardly towards the upper end. The lower end section on the outer surface side of the upper side wall section 42 curves outwardly and then curves further downwardly. As illustrated in FIG. 5, the lower end section on the outer surface side of the upper side wall section 42 is engaged on the outer side of the section projecting outwardly and upwardly on the upper end of the outer side wall section 232 of the excrement containment receptacle 2.

As illustrated in FIG. 1 to FIG. 3, the height of the three upper side wall sections 42 of the four upper side wall sections 42 described above is configured to be substantially equal. A gateway part 43 is formed on one of the upper side wall sections 42a of the four upper side wall sections 42 and is configured with a height that is less than the height of the other three upper side wall sections 42. A dog that uses the toilet system 1 for dogs may enter and leave the upper receptacle 4 from the gateway part 43.

The excrement containment receptacle 2 and the upper receptacle 4 are both formed integrally by extrusion molding.

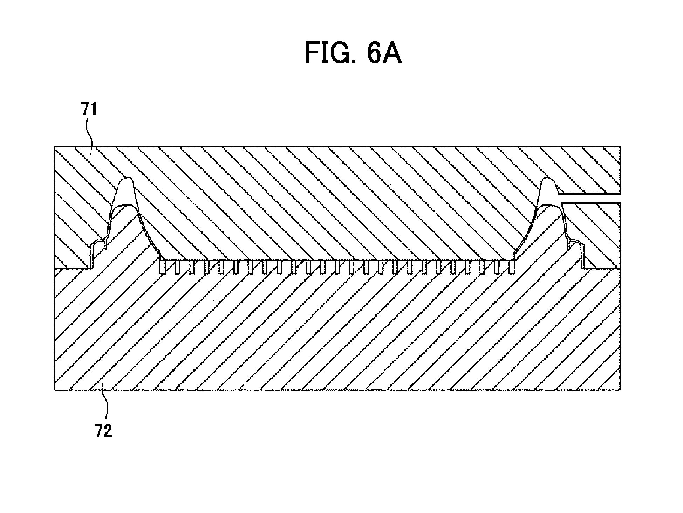

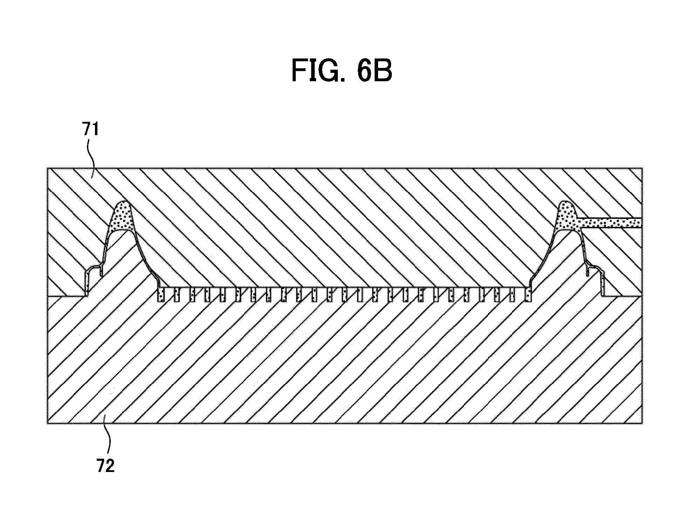

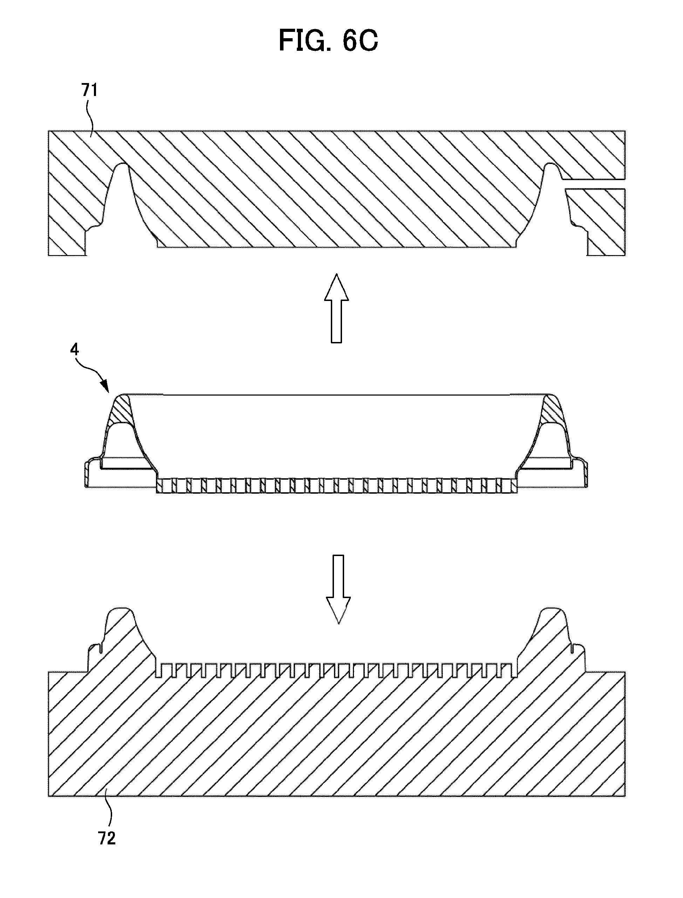

An example of a manufacturing step for the upper receptacle 4 will be described with reference to FIG. 6A to FIG. 6C. FIG. 6A to FIG. 6C illustrate the respective steps for manufacture of the upper receptacle 4. FIG. 6A illustrates the state in which the cavity mold 71 and the core mold 72 are closed. FIG. 6B illustrates the state of filling a resinous material into the space formed between the cavity mold 71 and the core mold 72. FIG. 6C illustrates the state of opening the cavity mold 71 and the core mold 72 and removing the upper receptacle 4.

As illustrated in FIG. 6A to FIG. 6C, the upper receptacle 4 is integrally formed by filling melted resinous material into a space configured with a shape that corresponds to the shape of the upper receptacle 4 formed between the cavity mold 71 and the core mold 72.

More specifically, a protruding shape is formed on the upper surface of the core mold 72 configured with a shape that corresponds with the shape of the plurality of through holes 413 of the lower surface section 41 and the shape on the lower surface of the upper side wall section 42. An indented shape is formed on the lower surface of the cavity mold 71 to have a shape that corresponds with the inner surface and the outer surface of the upper side wall section 42.

When manufacturing the upper receptacle 4, firstly as illustrated in FIG. 6A, the upper surface of the core mold 72 and the lower surface of the cavity mold 71 are opposed, and the core mold 72 and the cavity mold 71 are closed. Next, as illustrated in FIG. 6B, a melted resinous material is filled into the space formed between the cavity mold 71 and the core mold 72, and thereafter, the cavity mold 71 and the core mold 72 are cooled, and the filled resinous material is cured. Next, as illustrated in FIG. 6C, the cavity mold 71 and the core mold 72 are opened and the upper receptacle 4 is removed.

In the first embodiment, as described above, since the rise angle from the bottom surface section 41 of the upper side wall section 42 is configured to be at least 90 degrees, the whole upper receptacle 4 including the upper side wall section 42 and the bottom surface section 41 is integrally formed by extrusion molding.

The excrement containment receptacle 2 can also be manufactured by the same process as the upper receptacle 4.

A synthetic resin material to configure the excrement containment receptacle 2 and the upper receptacle 4 includes polyethylene, polypropylene, vinyl chloride resin, polystyrene, ABS resin, AS resin, polyester resin (polyethylene terephthalate and the like), polyamide resin, and polycarbonate resin and the like.

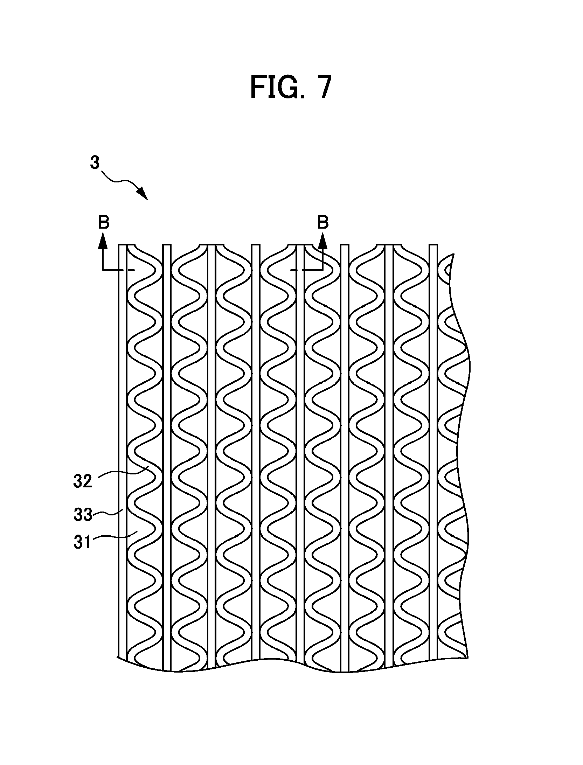

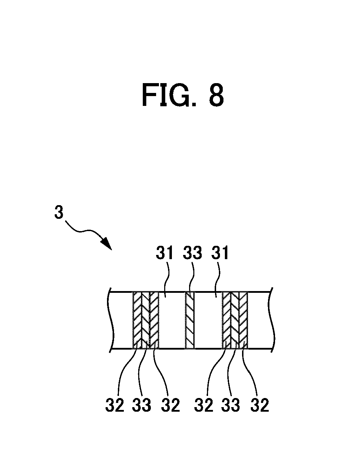

FIG. 7 is a plan view of the liquid-permeable panel 3. FIG. 8 is a sectional view along the line B-B in FIG. 7.

As illustrated in FIG. 1 and FIG. 2, the liquid-permeable panel 3 is disposed to cover the upper section of the excrement containment section 21 and is configured from a disposable panel that is liquid-absorbent. The liquid-permeable panel 3 is disposed on the upper surface side of the bottom surface section 41 of the upper receptacle 4 and covers substantially the whole region on the upper surface of the bottom surface section 41.

In the present embodiment, as illustrated in FIG. 2, the liquid-permeable panel 3 is formed in a rectangular shape that is approximately half of the size of the bottom surface section 41, and two liquid-permeable panels 3 cover the upper surface of the bottom surface section 41. The longitudinal direction of the liquid-permeable panel 3 is disposed along the direction (second direction Y) of extension of the upper side wall section 42a forming the gateway part 43 of the upper receptacle 4. The liquid-permeable panel 3 described above includes predetermined liquid permeable characteristics, liquid absorption characteristics, and deodorizing characteristics.

As illustrated in FIG. 7 and FIG. 8, the liquid-permeable panel 3 includes a plurality of holes 31 penetrating through the thickness direction of the liquid-permeable panel 3, and excrement passes through the plurality of holes 31 in the thickness direction of the liquid-permeable panel 3. The shape and the surface area of the openings of the plurality of holes 31 may be the same or different. The liquid-permeable panel 3 that includes the plurality of holes 31 for example may reduce the amount of residual excrement in the inner portion of the liquid-permeable panel 3 in comparison to a panel that is provided with holes that extend in an irregular direction such as a sponge material. Consequently, wetting of the feet of the dog can be suppressed when the dog stands on the liquid-permeable panel 3.

When the liquid-permeable panel 3 includes a plurality of holes 31 penetrating through the thickness direction of the liquid-permeable panel 3, the average surface area of the openings of the plurality of holes 31 is preferably 10 $mm^2$/hole to 100 $mm^2$/hole, and more preferably 15 $mm^2$/hole to 60 $mm^2$/hole. When the average surface area of the openings of the plurality of holes 31 is excessively small, the amount of excrement that attaches to the liquid-permeable panel 3 increases and suppression of wetting of the feet of the dog becomes difficult. An excessively large average surface area of the openings of the plurality of holes 31 is not preferred since there is a need to increase the thickness of the liquid-permeable panel 3 to impart sufficient strength to the liquid-permeable panel 3. There is no particular limitation in relation to the measurement method of the average surface area of the openings of the plurality of holes 31, and various known methods may be used. The average surface area of the openings of the plurality of holes 31 for example may be measured by a method of image analysis of a photograph of the openings.

When the liquid-permeable panel 3 includes a plurality of holes 31 penetrating through the thickness direction thereof, a preferred structure for the panel includes a honeycomb structure or a corrugated honeycomb structure. A panel with a corrugated honeycomb structure is still more preferred as a configuration of a panel in light of facilitating manufacture and cost effectiveness.

A liquid-permeable panel 3 having a corrugated honeycomb structure includes a laminated corrugated board having a size of holes 31 (cells) of 5 mm and a thickness of 5 mm. The panel material may be exemplified by a panel in which a $COBB_{30}$ method (JIS-P8140) is used to form a water resistant base paper exhibiting absorption characteristics of 10 $g/m^2$ to 20 $g/m^2$. The corrugated honeycomb panel exhibiting absorption characteristics within the above absorption range preferably is also imparted with strength when wet and delayed liquid-absorbent characteristics. Since the liquid-permeable panel 3 has a plurality of holes 31 penetrating through the thickness direction thereof, urine passes below the plurality the holes 31 and does not tend to expand on the surface of the liquid-permeable panel 3 on which the dog has mounted.

The liquid-permeable panel 3 having a corrugated honeycomb structure will be described below in detail. The liquid-permeable panel 3 having a corrugated honeycomb structure is manufactured by the following sequence.

Firstly, a corrugated sheet 32 and a flat sheet 33 are bonded to thereby obtain a one-sided corrugated board member. Then, a plurality of the resulting one-sided corrugated board members is laminated, and the members in adjacent layers are bonded. In this manner, a block-shaped member forming a plurality of holes 31 is obtained, and the holes 31 are formed by the space enclosed by the corrugated sheet 32 and the flat sheet 33.

Next, the resulting block-shaped members are sliced to a predetermined thickness in a direction that is substantially vertical to the direction of the penetrating of the holes 31. In this manner, the liquid-permeable panel 3 having a corrugated honeycomb structure forming the plurality of holes 31 can be manufactured.

There is no particular limitation on the method of bonding the corrugated sheet 32 and the flat sheet 33, and a known bonding method such as a bonding method that uses adhesive may be used. The adhesive used to bond the corrugated sheet 32 and the flat sheet 33 includes for example a vinyl acetate water resistant adhesive. The vinyl acetate water resistant adhesive preferably imparts strength to the panel when wet.

The above liquid-permeable panel 3 is disposed so that the longitudinal direction of the liquid-permeable panel 3 extends along the direction (second direction Y) of extension of the second crosspieces 412 of the bottom surface section 41. That is to say, the direction of extension of the first crosspieces 411 of the bottom surface section 41 (first direction X) and the direction of extension of the corrugated sheet 32 and the flat sheet 33 in the inner portion of the liquid-permeable panel 3 exhibit an intersecting configuration (substantially orthogonal). In this configuration, the first crosspieces 411 are reinforced by the corrugated sheet 32 and the flat sheet 33 that configure the liquid-permeable panel 3. As a result, since the strength of the toilet system 1 for dogs is synergistically increased by the liquid-permeable panel 3 and the bottom surface section 41, the thickness of the bottom surface section 41 and the width of the first crosspieces 411 and the second crosspieces 412 can be reduced.

Various materials can be used without limitation as long as the material of the panel that exhibits liquid-absorbent characteristics and configures the liquid-permeable panel 3 allows enhanced passage of excrement and exhibits a predetermined liquid absorption. An actual example of a material that has liquid-absorbent characteristics includes woody fiber such a pulp in addition to various organic or inorganic porous materials, or a woven or non-woven fabric configured from various organic or inorganic fibrous materials. An actual example of an organic fibrous material includes a cellulose fiber material such as a wood fiber (pulp or the like), cotton, hemp, or the like, an animal fiber such as animal hair or the like (wool, or the like), or a synthetic fiber such as a polyolefin fiber (polyethylene, polypropylene, or the like) a polyester fiber (polyethylene terephthalate, or the like), a nylon fiber (nylon 6, nylon 66, or the like), or an acrylic fiber or the like.

Of the above materials, from the point of view of facilitating processing operations and cost effectiveness, the material for the panel is preferably pulp, and still more preferably a corrugated board paper that exhibits suitable liquid permeable characteristics and liquid-absorbent characteristics. In this case, the corrugated board paper preferably contains a water repellent agent or a hydrophobic agent such as a sizing agent, and imparts predetermined liquid-absorbent characteristics to the corrugated board paper (liquid-permeable panel 3) in response to the type and amount of the sizing agent.

The thickness of the liquid-permeable panel 3 described above is configured as 3 mm to 25 mm, preferably 3 mm to 10 mm, and still more preferably 3 mm to 7 mm. When the thickness of the liquid-permeable panel 3 is in the above range, a liquid such as urine or the like that passes in the thickness direction of the liquid-permeable panel 3 is inhibited from returning to the surface (upper surface) of the liquid-permeable panel 3.

When the thickness of the liquid-permeable panel 3 is less than 3 mm, passage of a liquid such as urine or the like into the excrement containment section 21 is prevented by deformation of the liquid-permeable panel 3, and the liquid-permeable panel 3 may be ruptured by the weight of the dog.

When the thickness of the liquid-permeable panel 3 exceeds 25 mm, the height from the lower end of the excrement containment receptacle 2 to the upper surface of the liquid-permeable panel 3 in the toilet system 1 for dogs is increased. Furthermore there is the problem that a single excretion increases the absorption amount of excrement in the liquid-permeable panel 3 and thereby shortens the exchange cycle or the problem of bulkiness when storing the liquid-permeable panel 3 for use in exchange operations.

The liquid permeation rate of the liquid-permeable panel 3 is preferably at least 90% and still more preferably at least 93%. Use of the liquid-permeable panel 3 that has the above liquid permeation rate enables a reduction in the attachment of urine to the liquid-permeable panel 3 after excrement and inhibits production of wetting of the feet of the dog due to standing on the liquid-permeable panel 3 or dispersion of urine in the inner section of the liquid-permeable panel 3. The liquid permeation rate of the liquid-permeable panel 3 may be measured by the following method.

Method for Measurement of Liquid Permeation Rate

A tray configured in advance to measure a weight (A) is placed in a lower section of a test sample for measurement of the liquid permeation rate of the liquid-permeable panel 3. The weight of artificial urine (B) is measured by measurement of approximately 30 ml of artificial urine. A circular cylinder having an inner diameter 60 mm is placed on the sample and artificial urine is dripped uniformly onto an inner side of the circular cylinder. The weight (C) of the tray containing the artificial urine is measured upon stopping of the liquid drops of artificial urine from the sample. The value for the liquid permeation rate is calculated using the formula below. The artificial urine uses the following composition.

Composition of Artificial Urine

Urea 400 g
Sodium chloride 160 g
Magnesium sulfate (heptahydrate) 16g
Calcium chloride (dihydrate) 6g
Adjust above with water to make total of 20L. Add 2 g of Blue No. 1 to add color to adjusted liquid.

Formula for Calculation of Liquid Permeation Rate

$$\text{Liquid Permeation Rate (\%)} = (\text{weight (C)} - \text{weight (A)}) \div$$

$$\text{weight (B)} \times 100$$

The liquid-permeable panel 3 preferably has liquid-absorbent characteristics of 10 %/min to 50%/min, and still more preferably 15 %/min to 40 %/min. Use of the liquid-permeable panel 3 with the above liquid-absorbent characteristics can suppress wetting of the feet of the dog, because the liquid-permeable panel 3 can absorb small amount of attached excrement after passage of a large amount of the excrement. When the liquid-absorbent characteristics of the liquid-permeable panel 3 are excessively large, during passage of the excrement, a large amount of excrement is absorbed by the liquid-permeable panel 3. As a result, seepage of excrement results from the dog standing at the position at which excretion occurs on the liquid-permeable panel 3 and therefore there is a tendency for wetting of the feet of the dog. When the liquid-absorbent characteristics of the liquid-permeable panel 3 are excessively small, the excrement attached to the liquid-permeable panel 3 remains on the surface of the liquid-permeable panel 3 in a liquid state and therefore there is a tendency for wetting of the feet of the dog. The liquid-absorbent characteristics of the liquid-permeable panel 3 can be measured using the following method. Method of Measuring Liquid-Absorbent Characteristics

The weight (A) of a test sample is measured in which a measurement object such as the liquid-permeable panel 3 is cut into 5 cm x 5 cm. The cut test sample is immersed in artificial urine for one minute. After immersion for one minute, the sample is removed, artificial urine attached to the surface is wiped off, and the weight (B) of each test sample is measured. The value of the liquid absorption characteristics is calculated based on the formula below. The artificial urine is the same as that used for measurement of the liquid permeation rate.
Formula for Calculation of Liquid-Absorbent Characteristics

$$\text{Liquid-Absorbent Characteristics (\%/min)} = (\text{weight (B)} -$$

$$\text{weight (A)}) \div \text{weight (A)} \times 100$$

As illustrated in FIG. 2 and FIG. 3, the toilet system 1 for dogs as described above disposes an upper receptacle 4 on an upper section of the excrement containment receptacle 2 in a state in which the liquid-absorbent sheet 6 is contained in the excrement containment receptacle 21 and is used by mounting the liquid-permeable panel 3 on the bottom surface section 41 of the upper receptacle 4. As illustrated in FIG. 3, in this state, since the bottom surface section 41 is disposed between the excrement containment section 21 and the liquid-permeable panel 3, a predetermined space 5 is formed between the upper surface of the liquid-absorbent sheet 6 and the liquid-permeable panel 3.

The following effects are obtained by the toilet system 1 for dogs according to the first embodiment as described above.

When the upper side wall section and the bottom wall section are separately formed, and connected to configure the upper receptacle, a gap is produced in the connection section of the upper side wall section and the bottom surface section, and a liquid such as urine seeps into the gap. In this regard, the upper receptacle 4 is integrally formed by imparting a rise angle from the bottom surface section 41 of the upper side wall section 42 of at least 90 degrees. In this manner, since the upper receptacle 4 is configured without provision of a seam between the upper side wall section 42 and the bottom surface section 41, even when a liquid such as urine or the like becomes attached to the upper side wall section 42, the attached liquid flows smoothly from the upper side wall section 42 to the bottom surface section 41 and permeates from the bottom surface section 41 to the excrement containment receptacle 2. Consequently, since the upper receptacle 4 tends not to be soiled by a liquid such as urine or the like, the load related to cleaning of the toilet system 1 for dogs can be reduced.

The toilet system 1 for dogs can be suitably used without filling the upper receptacle 4 with particulate matter by mounting a liquid-permeable panel 3 that has liquid-absorbent characteristics on the upper surface side of the bottom surface section 41.

The transverse length in plan view of the plurality of through holes 413 is 5 mm to 20 mm. In this manner, when cleaning the upper receptacle 4, a finger of the person performing cleaning can be easily inserted into the plurality of through holes 413. Therefore, cleaning of the upper receptacle 4 can be simplified.

The toilet system 1 for dogs according to the present invention is used by mounting of the liquid-permeable panel 3 on the upper surface side of the bottom surface section 41. Consequently, in the first embodiment, since the strength of the bottom surface section 41 can be maintained by common use of the upper receptacle 4 and the liquid-permeable panel 3, the width W1 of the first crosspieces 411 and the width W2 of the second crosspieces 412 can be reduced in comparison to the heretofore. Therefore attachment of contaminants to the bottom surface section 41 can be reduced.

The inner surface of the upper side wall section 42 is configured as a curving surface and through holes 413 are provided in proximity to the rim portion of the bottom surface section 41. In this manner, the liquid such as urine or the like that has attached to the inner surface of the upper side wall section 42 can be smoothly displaced toward the bottom surface section 41 along the curved surface without remaining on the upper side wall section 42. Furthermore since the through holes 413 are provided in proximity to the rim portion of the bottom surface section 41 that is the border section with the upper side wall section 42 on the bottom surface section 41, a liquid such as urine or the like that has flowed along the inner surface of the upper side wall section 42 passes rapidly through the through holes 413 to the excrement containment receptacle 2. The liquid such as urine or the like that has been excreted into the upper receptacle 4 is displaced rapidly into the excrement containment receptacle 2 without remaining on the upper receptacle 4 and therefore the upper receptacle 4 is resistant to soiling.

The liquid-permeable panel 3 is a disposable panel, detachable to the bottom surface section 41. Therefore, even when the liquid-permeable panel 3 is soiled by absorption of urine or blockage with feces, the soiled liquid-permeable panel 3 can be simply replaced to thereby simplify performance of the cleaning operation of the toilet system 1 for dogs.

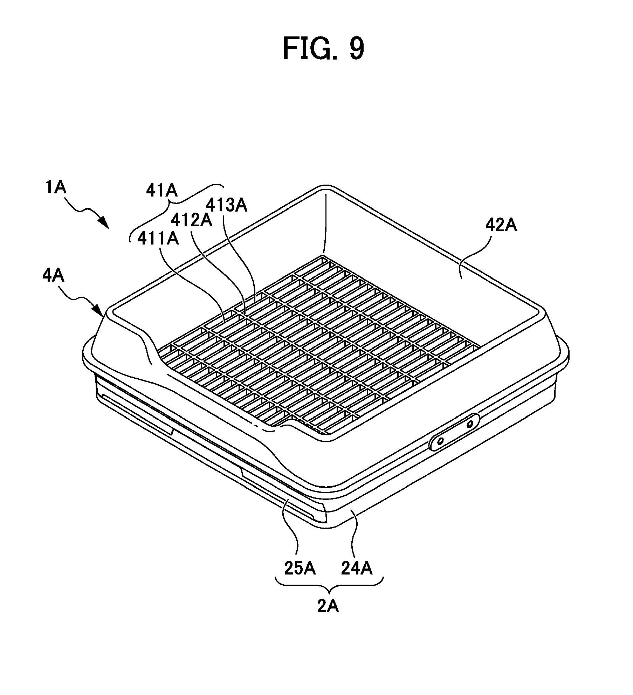

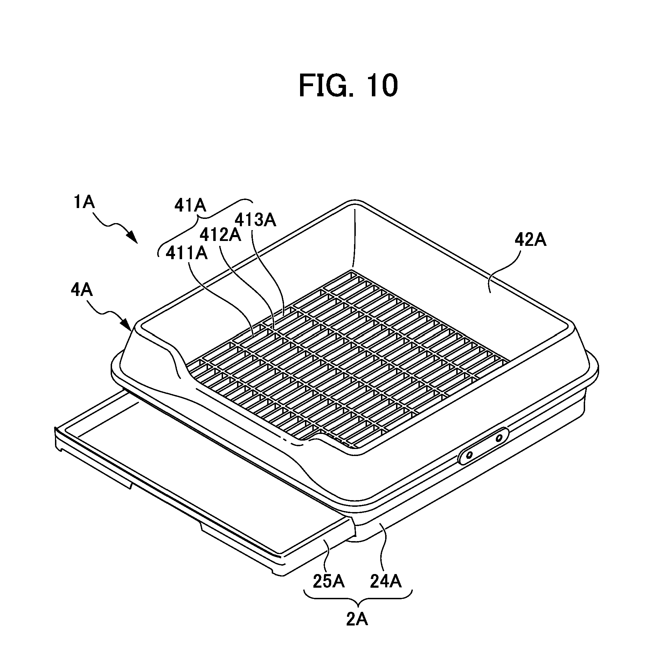

Next, a second embodiment of the toilet system 1 for dogs according to the present invention will be described making reference to FIG. 9 and FIG. 10. FIG. 9 is a perspective view illustrating a toilet system 1A for a dog according to a second embodiment of the present invention. FIG. 10 is a perspective view illustrating the state in which a retractable portion is pulled from the toilet system 1A for a dog illustrated in FIG. 9.

The same constituent elements as the first embodiment are denoted by the same reference numerals in the second embodiment and description will be simplified or will not be repeated.

The toilet system 1A for a dog according to the second embodiment differs from the first embodiment in relation to the configuration of the excrement containment receptacle 2A.

In the second embodiment, the excrement containment receptacle 2A includes a main section 24A, and a retractable tray 25A that is insertable or detachable in relation to the main section 24A. The main section 24A supports an upper receptacle 4A. The main section 24A includes a bottom surface section that has substantially square shape when viewed in plan and four side wall sections that rise from the four sides of the bottom surface section. An opening corresponding to the size of the retractable tray 25A is provided on one side wall section of the four side wall sections. The retractable tray 25A is configured to include an excrement containment section 21A and a liquid-absorption sheet 6 is disposed in the excrement containment section 21A. The retractable toilet 25A is inserted into the main section 24A from the opening provided in the side wall section of the main section 24A.

According to the toilet system 1A for a dog according to the second embodiment, in addition to the effects (1) to (5) above, the following effects is obtained.

The excrement containment receptacle 2 includes the retractable tray 25A that includes the excrement containment section 21A. A liquid-absorbent sheet 6 that absorbs a liquid such as urine or the like that is contained in the excrement containment section 21A is simply cleaned or replaced by retracting the retractable toilet 25A, and therefore, the cleaning of the system tray 1A for a dog can be simply performed.

Although the preferred embodiments of a toilet system for dogs according to the present invention have been described above, the present invention is not limited to the embodiments described above and various modifications are possible.

### Claims

1. A toilet system for dogs comprising:

   an excrement containment receptacle having an excrement containment section for containment of excrement;
   an upper receptacle having a liquid-permeable bottom surface section and a side wall section that rises from a rim of the bottom surface section; and
   a liquid-permeable panel that is liquid-absorbent used and mounted on a top surface of the bottom surface section, wherein
   a rise angle of the side wall section from the bottom surface section is at least 90 degrees, and the bottom surface section and the side wall section of the upper receptacle are formed integrally without seams.

2. The toilet system for dogs according to claim 1,
   wherein the bottom surface section comprises:

   a plurality of first crosspieces disposed at a predetermined interval and extending in a first direction that is orthogonal to a thickness direction of the bottom surface section,
a plurality of second crosspieces disposed at a predetermined interval and extending in a second direction that is orthogonal to the thickness direction of the bottom surface section and orthogonal to the first direction, and a plurality of through holes enclosed by the first crosspiece and the second crosspiece, penetrating through the thickness direction of the bottom surface section.

3. The toilet system for dogs according to claim 2,
wherein the plurality of through holes is formed with a rectangular shape, each has substantially the same shape and dimensions when viewed in plan, and the transverse length of the through holes when viewed in plan is 5 mm to 20 mm.

4. The toilet system for dogs according to claim 2 or 3,
wherein an inner surface of the side wall section is configured from a curved surface that curves towards an outer side, and the plurality of through holes is formed in substantially whole area including a proximity of the rim of the bottom surface section.

5. The toilet system for dogs according to any one of claims 1 to 4,
wherein the liquid-permeable panel is a disposable panel that is mainly configured from paper, and includes a plurality of holes penetrating through a thickness direction thereof.

# FIG. 1

FIG. 2

# FIG. 3

# FIG. 4

# FIG. 5

## FIG. 6A

# FIG. 6B

# FIG. 6C

# FIG. 7

# FIG. 8

# FIG. 9

# FIG. 10

<table>
<tr><td colspan="2" align="center">**INTERNATIONAL SEARCH REPORT**</td><td>International application No.<br>PCT/JP2011/062961</td></tr>
</table>

A. CLASSIFICATION OF SUBJECT MATTER
*A01K23/00*(2006.01)i, *A01K1/01*(2006.01)i

According to International Patent Classification (IPC) or to both national classification and IPC

B. FIELDS SEARCHED

Minimum documentation searched (classification system followed by classification symbols)
A01K23/00, A01K1/01

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2006/025435 A1 (Kao Corp.),<br>09 March 2006 (09.03.2006),<br>paragraphs [0008], [0017], [0018], [0023];<br>fig. 1, 3, 4(a)<br>& JP 2006-67920 A      & JP 2006-109808 A<br>& US 2008/0035069 A1    & EP 1790219 A1 | 1-5 |
| X | WO 2007/077756 A1 (Kao Corp.),<br>12 July 2007 (12.07.2007),<br>paragraphs [0022], [0027]; fig. 1, 2<br>& JP 2007-174942 A      & US 2009/0038554 A1<br>& EP 1967063 A1 | 1-5 |

☒ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>29 August, 2011 (29.08.11) | Date of mailing of the international search report<br>06 September, 2011 (06.09.11) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/062961 |

C (Continuation).    DOCUMENTS CONSIDERED TO BE RELEVANT

| Category* | Citation of document, with indication, where appropriate, of the relevant passages | Relevant to claim No. |
| --- | --- | --- |
| E,X | JP 2011-135839 A  (Uni-Charm Corp.), 14 July 2011 (14.07.2011), paragraphs [0028] to [0029], [0038] to [0041]; fig. 1 to 4 (Family: none) | 1-5 |
| A | JP 2006-44 A  (Kazuhiko SAWA), 05 January 2006 (05.01.2006), entire text; all drawings (Family: none) | 1-5 |
| A | JP 2006-238780 A  (Kabushiki Kaisha Oshima Design Sekkei), 14 September 2006 (14.09.2006), entire text; all drawings (Family: none) | 1-5 |

Form PCT/ISA/210 (continuation of second sheet) (July 2009)

EP 2 586 299 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008148603 A